# DEMANDE DE BREVET EUROPEEN

(11) **EP 4 378 730 A1**
(43) Date de publication de la demande: **05.06.2024**
(21) Numéro de dépôt: 23211798.6
(22) Date de dépôt: 23.11.2023
(51) Int. Cl.: B60K 7/00, B60B 25/00

(54) **JANTE POUR ROUE ASSEMBLÉE POUR LOGER UN MOTEUR ÉLECTRIQUE DE VÉHICULE**

(30) Priorité: 01.12.2022 FR 2212612
(71) Demandeur: Renault s.a.s, 92100 Boulogne Billancourt (FR)
(72) Inventeur: BOULANDET-NAUDIN, Laetitia, 78280 GUYANCOURT (FR); BOURLON, Franck, 78280 GUYANCOURT (FR); FREZZA, Olivier, 78280 GUYANCOURT (FR); LAFORGE, Stephane, 72000 LE MANS (FR); MILLON, Jean-Pierre, 78280 GUYANCOURT (FR)

(57) **Abrégé**

L'invention porte sur une jante 10 pour une roue 7 d'axe principal A comprenant un volume interne cylindrique V d'axe confondu avec l'axe principal A, le volume interne V ayant un rayon principal RV pour loger un moteur électrique 4, la jante comprenant un crochet extérieur 11 et un crochet intérieur 20 destinés à maintenir en position un pneumatique sur la jante, la jante 10comprendant une extension cylindrique 30 d'axe confondu avec l'axe principal A, l'extension cylindrique 30 s'étendant radialement depuis le rayon principal RV jusqu'à un rayon supérieur au rayon principal RV et s'étendant axialement selon une direction axiale D parallèle à l'axe principal A dirigée vers l'opposée du crochet extérieur 11 de sorte que l'extension cylindrique 30 enveloppe le volume interne V au-delà du crochet intérieur 20 pour protéger le moteur électrique 4 en cas de choc au niveau de la jante 10.

## Description

### Domaine technique de l'invention

L'invention concerne une jante pour une roue assemblée logeant un moteur électrique. L'invention porte encore sur une roue assemblée comprenant une telle jante. L'invention porte encore sur un véhicule comprenant une telle jante ou une telle roue assemblée.

### Etat de la technique antérieure

Un véhicule, en particulier un véhicule automobile, comprend généralement des roues assemblées motrices. Une jante d'une telle roue assemblée motrice loge habituellement des éléments de freinage tels que disque et/ou étrier et/ou tambour et/ou segments de frein, le couple d'entraînement provenant d'un arbre de transmission.

Certains véhicules électriques sont équipés d'une roue assemblée motrice comprenant un moteur électrique. Un tel moteur électrique est généralement agencé au sein d'une jante d'une telle roue assemblée motrice et généralement juxtaposé à des éléments de freinage.

Ainsi, un tel moteur électrique, en particulier agencé à côté de tels éléments de freinage, dépasse d'une telle jante du côté intérieur d'une telle roue assemblée. Il en résulte un risque de détérioration d'un tel moteur électrique lors de la descente ou de la montée d'un trottoir et/ou de passage dans un nid de poule profond et/ou de passage au niveau de certains types de bouche d'égouts, ou encore dans d'autres contextes de franchissement rencontrés par un tel véhicule. Cette situation n'est pas acceptable.

### Présentation de l'invention

Le but de l'invention est de fournir une jante remédiant aux inconvénients ci-dessus. En particulier, l'invention propose une jante économique, simple à fabriquer, sans nuire à l'esthétique externe d'une telle jante.

### Résumé de l'invention

Pour atteindre cet objectif, l'invention porte sur une jante pour une roue, notamment pour une roue assemblée, ayant un axe principal, la jante comprenant un volume interne cylindrique ou sensiblement cylindrique d'axe confondu ou sensiblement confondu avec l'axe principal, le volume interne ayant un rayon principal pour loger un moteur électrique d'entraînement en rotation d'une telle roue, la jante comprenant un crochet extérieur et un crochet intérieur destinés à maintenir en position un pneumatique sur la jante, la jante comprenant une extension cylindrique d'axe confondu ou sensiblement confondu avec l'axe principal, l'extension cylindrique s'étendant radialement depuis le rayon principal jusqu'à un rayon supérieur au rayon principal et s'étendant axialement selon une direction axiale parallèle à l'axe principal dirigée vers l'opposée du crochet extérieur de sorte que l'extension cylindrique enveloppe le volume interne au-delà du crochet intérieur selon la direction axiale pour protéger un tel moteur électrique en cas de choc au niveau de la jante.

Le crochet intérieur peut s'étendre entre un rayon de fond de jante et un rayon maximal et l'extension cylindrique peut comprendre une surface externe cylindrique de rayon compris entre le rayon principal et le rayon maximal du crochet intérieur.

Le crochet intérieur peut s'étendre entre un rayon de fond de jante et un rayon maximal et l'extension cylindrique peut comprendre une surface externe cylindrique de rayon égal ou sensiblement égal au rayon de fond de jante.

Le crochet intérieur peut s'étendre entre un rayon de fond de jante et un rayon maximal et l'extension cylindrique peut comprendre une surface externe cylindrique de rayon égal ou sensiblement égal au rayon maximal du crochet intérieur.

Le crochet intérieur peut s'étendre entre un rayon de fond de jante et un rayon maximal et l'extension cylindrique peut comprendre une surface externe tronconique ou sensiblement tronconique pouvant s'étendre depuis le rayon maximal du crochet intérieur jusqu'à un rayon égal ou sensiblement égal au rayon de fond de jante ou jusqu'au rayon principal ou sensiblement jusqu'au rayon principal du volume interne.

Le crochet intérieur peut s'étendre entre un rayon de fond de jante et un rayon maximal et l'extension cylindrique peut comprendre une surface externe comprenant une portion arrondie concave ou convexe pouvant s'étendre depuis le rayon maximal du crochet intérieur jusqu'à un rayon égal ou sensiblement égal au rayon de fond de jante ou jusqu'au rayon principal ou sensiblement jusqu'au rayon principal du volume interne.

L'invention porte encore sur une roue comprenant un voile et une jante telle que définie précédemment, la roue étant monobloc, notamment en étant venue de matière.

La roue peut être en alliage d'aluminium ou en matériau composite ou en acier.

L'invention porte encore sur une roue, notamment une roue assemblée, comprenant une jante telle que définie précédemment et un moteur électrique agencé au sein du volume interne.

L'invention porte encore sur un véhicule, notamment un véhicule automobile, notamment un véhicule automobile électrique, comprenant au moins une roue telle que définie précédemment, ou au moins une jante telle que définie précédemment.

### Présentation des figures

Ces objets, caractéristiques et avantages de la présente invention seront exposés en détail dans la description suivante d'un mode de réalisation préféré et de variantes faite à titre non-limitatif en relation avec les figures jointes parmi lesquelles :
La figure 1 est une vue schématique d'un véhicule automobile selon un mode de réalisation de l'invention.
La figure 2 est une demi vue partielle schématique en coupe d'une roue, selon un plan passant par l'axe principal, selon un mode de réalisation préféré de l'invention.
La figure 3 est une demi vue partielle schématique en coupe d'une roue, selon un plan passant par l'axe principal, selon une première variante du mode de réalisation de l'invention.
La figure 4 est une demi vue partielle schématique en coupe d'une roue, selon un plan passant par l'axe principal, selon une deuxième et une troisième variante du mode de réalisation de l'invention.
La figure 5 est une demi vue partielle schématique en coupe d'une roue, selon un plan passant par l'axe principal, selon une quatrième et une sixième variante du mode de réalisation de l'invention.
La figure 6 est une demi vue partielle schématique en coupe d'une roue, selon un plan passant par l'axe principal, selon une cinquième et une septième variante du mode de réalisation de l'invention.
La figure 7 est une demi vue partielle schématique en coupe d'une roue assemblée selon le mode de réalisation ou une variante, selon un plan passant par l'axe principal, au cours d'une descente d'un trottoir.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

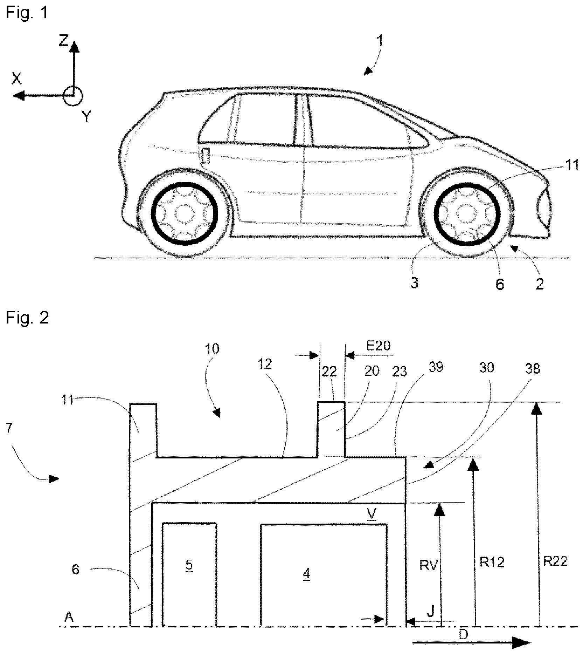

Comme illustré sur la figure 1, un véhicule, par exemple un véhicule automobile 1, comprend au moins une roue assemblée motrice 2. Par exemple, le véhicule comprend deux roues assemblées motrices. Par exemple, les deux roues assemblées motrices sont agencées à l'avant (traction) ou les deux roues assemblées motrices sont agencées à l'arrière (propulsion).

Par « jante», on désigne la partie cylindrique d'une roue.

Par « roue », on désigne la partie cylindrique d'une roue, soit la « jante », associée à un disque ou voile fixé sur la partie cylindrique ou venu de matière avec la partie cylindrique. Le disque ou le voile comprend de préférence des trous de fixation d'une telle roue sur un moyeu.

Par « roue assemblée », on désigne une roue sur laquelle est monté notamment un pneumatique, et en cas de roue motrice électrique, un moteur électrique.

Alternativement, le véhicule comprend trois, voire quatre roues assemblées motrices 2, voire davantage en cas de véhicule équipé de plus de quatre roues assemblées.

La roue assemblée 2 comprend une roue 7 et un pneumatique 3. La roue 7 comprend une jante 10 et un voile ou disque 6. La roue assemblée 2 comprend encore au moins un moteur électrique 4 destiné à entraîner en rotation la roue assemblée 2. L'au moins un moteur électrique 4 est agencé au sein d'un volume interne V ménagé dans la jante 10. Plus précisément, comme illustré notamment sur la figure 2 illustrant un mode de réalisation préféré, la jante 10 de la roue assemblée 2 a un axe principal A de rotation. La jante 10 comprend le volume interne V ou cavité, cylindrique ou sensiblement cylindrique, d'axe confondu ou sensiblement confondu avec l'axe principal A de rotation. Le volume interne V a un rayon principal RV. Ainsi, le moteur électrique 4 est logé, agencé (voire fixé au niveau d'un rotor du moteur par exemple), dans le volume interne V.

La jante 10 comprend encore un crochet ou épaulement extérieur ou externe 11. La jante 10 comprend encore un crochet ou épaulement intérieur ou interne 20. Les crochets intérieur et extérieur 20, 11 permettent de maintenir en position, bloquer, le pneumatique 3 (non illustré sur les figures 2 à 6) par rapport à la jante 10. Un fond 12 de jante s'étend entre le crochet extérieur 11 et le crochet intérieur 20. Plus précisément, le crochet intérieur 20 s'étend entre le rayon R12 du fond de jante et un rayon maximal R22. Le rayon maximal R22 correspond au rayon d'une surface externe 22 du crochet intérieur 20, c'est-à-dire de préférence le plus grand rayon du crochet intérieur 20.

La jante 10 comprend encore une extension cylindrique 30 d'axe confondu, ou sensiblement confondu, avec l'axe principal A. L'extension cylindrique 30 s'étend radialement depuis le rayon principal RV du volume interne V jusqu'à un rayon supérieur au rayon principal RV. Autrement dit l'extension cylindrique 30 s'étend jusqu'à un rayon plus grand que le rayon principal RV du volume interne V. L'extension cylindrique 30 s'étend axialement selon une direction axiale D parallèle à l'axe principal A dirigée vers l'opposée du crochet extérieur 11. Ainsi, l'extension cylindrique 30 s'étend du côté intérieur de la jante 10. Autrement dit, l'extension cylindrique 30 s'étend en direction du véhicule.

Comme illustré sur les figures 2 à 6, l'extension 30 enveloppe, couvre, le volume interne V à partir de et/ou au-delà du crochet intérieur 20 selon la direction axiale D.

Plus précisément, comme illustré sur la figure 2, dans le mode de réalisation préféré, l'extension cylindrique 30 comprend une surface externe cylindrique 39. La surface cylindrique 39 a un rayon égal, ou sensiblement égal, au rayon de fond de jante R12. Alternativement, la surface cylindrique 39 peut avoir un rayon compris entre le rayon maximal R22 et le rayon de fond de jante R12 Alternativement encore, la surface cylindrique 39 peut avoir un rayon compris entre le rayon de fond de jante R12 et un rayon supérieur au rayon principal RV du volume interne V.

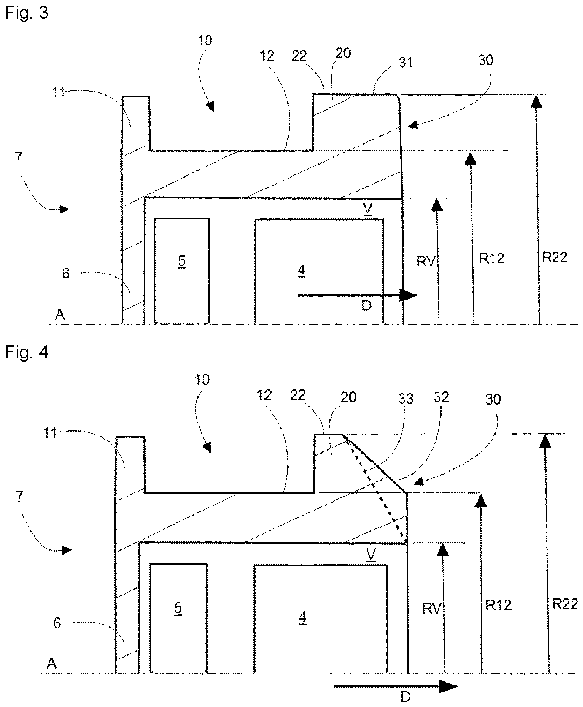

Comme illustré sur la figure 3, dans une première variante du mode de réalisation, l'extension cylindrique 30 comprend une surface externe cylindrique 31. La surface externe cylindrique 31 a alors un rayon égal, ou sensiblement égal, au rayon maximal R22 du crochet intérieur 20. Autrement dit, le crochet intérieur 20 se prolonge axialement, côté intérieur, vers le véhicule, de sorte à former l'extension cylindrique 30. Alternativement, un décrochement ou épaulement est formé au niveau de l'épaisseur E20 (voir figure 2), selon la direction axiale, du crochet intérieur 20 de sorte que la surface externe cylindrique 31 ait un rayon plus grand que le rayon maximal R22, ou ait un rayon plus petit que le rayon maximal R22, par exemple de quelques mm seulement.

Comme illustré sur la figure 4, dans une deuxième variante du mode de réalisation, l'extension cylindrique 30 comprend une surface externe tronconique 32, ou sensiblement tronconique. La surface externe tronconique 32 s'étend depuis le rayon maximal R22 du crochet intérieur 20 jusqu'à un rayon égal ou sensiblement égal au rayon de fond de jante R12. Alternativement, la surface externe 32 s'étend depuis un rayon légèrement inférieur, ou légèrement supérieur (par exemple quelques mm) au rayon maximal R22 du crochet intérieur 20 jusqu'à un rayon égal ou sensiblement égal au rayon de fond de jante R12. Alternativement, la surface externe 32 s'étend depuis le rayon maximal R22 du crochet intérieur 20 jusqu'à un rayon légèrement inférieur, ou légèrement supérieur (par exemple quelques mm) au rayon de fond de jante R12. Alternativement encore, la surface externe 32 s'étend depuis un rayon légèrement inférieur, ou légèrement supérieur (par exemple quelques mm) au rayon maximal R22 du crochet intérieur 20 jusqu'à un rayon légèrement inférieur, ou légèrement supérieur (par exemple quelques mm) au rayon de fond de jante R12.

Comme illustré sur la figure 4 en pointillés, dans une troisième variante du mode de réalisation, l'extension cylindrique 30 comprend une surface externe tronconique 33, ou sensiblement tronconique. La surface externe 33 en forme de tronc de cône s'étend depuis le rayon maximal R22 du crochet intérieur 20 jusqu'au rayon principal RV, ou sensiblement jusqu'au rayon principal RV du volume interne V. Alternativement, la surface externe tronconique 33 s'étend depuis un rayon légèrement inférieur, ou légèrement supérieur (par exemple quelques mm) au rayon maximal R22 du crochet intérieur 20 jusqu'au rayon principal RV du volume interne V. Alternativement, la surface externe tronconique 33 s'étend depuis le rayon maximal R22 du crochet intérieur 20 jusqu'à un rayon légèrement inférieur, ou légèrement supérieur (par exemple quelques mm) au rayon principal RV du volume interne V. Alternativement encore, la surface externe tronconique 33 s'étend depuis un rayon légèrement inférieur, ou légèrement supérieur (par exemple quelques mm) au rayon maximal R22 du crochet intérieur 20 jusqu'à un rayon légèrement inférieur, ou légèrement supérieur (par exemple quelques mm) au rayon principal RV du volume interne V.

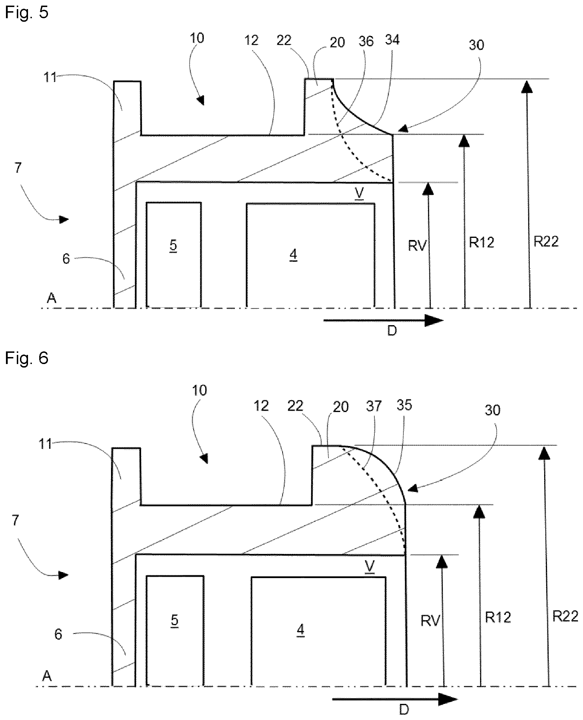

Comme illustré sur la figure 5, dans une quatrième variante du mode de réalisation, l'extension cylindrique 30 comprend une surface externe comprenant une portion arrondie concave 34. La portion arrondie concave 34 s'étend depuis le rayon maximal R22 du crochet intérieur 20 jusqu'à un rayon égal ou sensiblement égal au rayon de fond de jante R12. Alternativement, la portion arrondie concave 34 s'étend depuis un rayon légèrement inférieur, ou légèrement supérieur (par exemple quelques mm) au rayon maximal R22 du crochet intérieur 20 jusqu'à un rayon égal ou sensiblement égal au rayon de fond de jante R12. Alternativement, la portion arrondie concave 34 s'étend depuis le rayon maximal R22 du crochet intérieur 20 jusqu'à un rayon légèrement inférieur, ou légèrement supérieur (par exemple quelques mm) au rayon de fond de jante R12.

Comme illustré sur la figure 6, dans une cinquième variante du mode de réalisation, l'extension cylindrique 30 comprend une surface externe comprenant une portion arrondie convexe 35. La portion arrondie convexe 35 s'étend depuis le rayon maximal R22 du crochet intérieur 20 jusqu'à un rayon égal ou sensiblement égal au rayon de fond de jante R12. Alternativement, la portion arrondie convexe 35 s'étend depuis un rayon légèrement inférieur, ou légèrement supérieur (par exemple quelques mm) au rayon maximal R22 du crochet intérieur 20 jusqu'à un rayon égal ou sensiblement égal au rayon de fond de jante R12. Alternativement, la portion arrondie convexe 35 s'étend depuis le rayon maximal R22 du crochet intérieur 20 jusqu'à un rayon légèrement inférieur, ou légèrement supérieur (par exemple quelques mm) au rayon de fond de jante R12.

Comme illustré sur la figure 5 en pointillés, dans une sixième variante du mode de réalisation, l'extension cylindrique 30 comprend une surface externe comprenant une portion arrondie concave 36. La portion arrondie concave 36 s'étend depuis le rayon maximal R22 du crochet intérieur 20 jusqu'au rayon principal RV ou sensiblement jusqu'au rayon principal RV du volume interne V. Alternativement, la portion arrondie concave 36 s'étend depuis un rayon légèrement inférieur, ou légèrement supérieur (par exemple quelques mm) au rayon maximal R22 du crochet intérieur 20 jusqu'au rayon principal RV du volume interne V. Alternativement, la portion arrondie concave 36 s'étend depuis le rayon maximal R22 du crochet intérieur 20 jusqu'à un rayon légèrement inférieur, ou légèrement supérieur (par exemple quelques mm) au rayon principal RV du volume interne V.

Comme illustré sur la figure 6 en pointillés, dans une septième variante du mode de réalisation, l'extension cylindrique 30 comprend une surface externe comprenant une portion arrondie convexe 37. La portion arrondie convexe 37 s'étend depuis le rayon maximal R22 du crochet intérieur 20 jusqu'au rayon principal RV ou sensiblement jusqu'au rayon principal RV du volume interne V. Alternativement, la portion arrondie convexe 37 s'étend depuis un rayon légèrement inférieur, ou légèrement supérieur (par exemple quelques mm) au rayon maximal R22 du crochet intérieur 20 jusqu'au rayon principal RV du volume interne V. Alternativement, la portion arrondie convexe 37 s'étend depuis le rayon maximal R22 du crochet intérieur 20 jusqu'à un rayon légèrement inférieur, ou légèrement supérieur (par exemple quelques mm) au rayon principal RV du volume interne V.

De préférence, le rayon principal RV du volume interne V le long de l'extension cylindrique 30 selon la direction axiale D est constant ou sensiblement constant, comme illustré sur les figures 2 à 6. Alternativement, le volume interne V a un rayon non constant, par exemple en formant au moins une portion tronconique.

Alternativement, l'extension cylindrique 30 comprend une surface externe de forme différente de celles décrites et/ou comprend une surface interne non cylindrique, c'est-à-dire de rayon intérieur non constant.

De préférence, la jante 10 est monobloc, notamment en étant venue de matière. Par exemple, la jante est en alliage d'aluminium, ou en matériau composite, ou en acier.

Alternativement, un élément circulaire, une bague de forme cylindrique ou sensiblement cylindrique, est rapporté au niveau d'une face 23 (illustrée sur la figure 2) du crochet intérieur 20. L'élément rapporté forme ainsi l'extension cylindrique. Par exemple, cet élément circulaire est fixé par vissage, par exemple par des vis s'étendant parallèlement à l'axe principal A, et/ou par collage, ou encore par soudage.

Quelle que soit sa forme, l'extension cylindrique 30 permet de prolonger le volume interne V. Ainsi le volume interne V s'étend sur toute la largeur, selon la direction axiale, occupée par le moteur électrique 4. De préférence, comme illustré sur la figure 2, un jeu J demeure entre le moteur 4 et une face d'extrémité 38 de l'extension cylindrique 30. Par exemple, le jeu J est de quelques mm.

Ainsi, l'extension cylindrique 30 permet de protéger le moteur électrique 4 en cas de choc au niveau de la jante 10. Le jeu J permet de maximiser cette protection le cas échéant. Cette protection est obtenue en créant un volume interne logeant l'intégralité du moteur électrique 4 de la roue assemblée 2.

L'épaisseur radiale de l'extension cylindrique est définie, de préférence, de sorte à être suffisamment robuste pour ne pas se casser en cas de choc, voire ne pas se plier. Par « choc », on entend par exemple un contact contre un trottoir et/ou une bouche d'égouts et/ou un nid de poule profond au niveau de ou à proximité du crochet intérieur 20. La détermination de l'épaisseur radiale de l'extension cylindrique est de préférence définie en fonction du matériau de cette extension cylindrique, et en fonction de la jante elle-même en cas d'extension 30 venue de matière avec la jante.

En complément, la roue assemblée 2 peut comprendre des éléments de freinage 5, par exemple un disque de frein et/ou un étrier de frein et/ou un tambour de frein et/ou des segments de frein et/ou un tuyau ou durite rigide ou flexible pour liquide frein. Ce ou ces éléments sont de préférence logés dans le volume interne V de sorte à être également protégés vis-à-vis de tels chocs. Généralement, les éléments de freinage sont agencés côté extérieur de la jante, comme illustré sur les figures 2 à 6. En cas d'éléments de freinage agencés côté intérieur de la jante, l'extension cylindrique joue particulièrement un rôle de protection pour ces éléments.

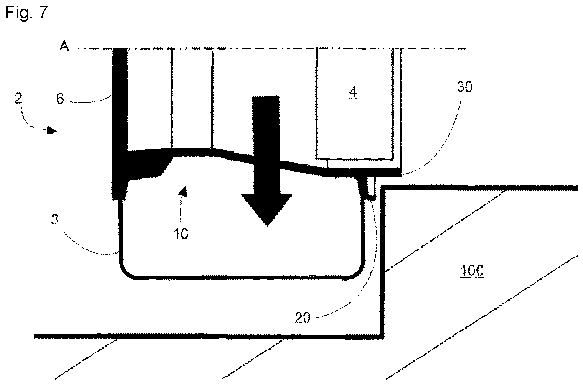

En résumé la solution offre une protection optimale pour un moteur électrique agencé au sein d'une jante de roue assemblée motrice. Le moteur électrique ne dépasse pas du côté interne ou intérieur de la jante du fait de l'extension cylindrique qui enveloppe intégralement le moteur électrique. Comme illustré sur la figure 7, on évite ainsi tout risque de détérioration du moteur électrique 4 lors de la descente ou la montée d'un trottoir 100 et/ou lors de passages dans des nids de poule profonds et/ou lors de passage au niveau de certains types de bouche d'égouts, et plus généralement dans tous contextes de franchissement rencontrés par le véhicule équipé de roue(s) assemblée(s) motrice(s) comprenant chacune un moteur électrique. En effet, l'extension cylindrique 30, en particulier au niveau de sa surface externe 31 ; 32 ; 33 ; 34 ; 35 ; 36 ; 37 ; 39, est apte à encaisser, recevoir, de tels chocs. Autrement dit, l'extension cylindrique tape contre, frotte contre, vient au contact de tels obstacles, notamment de type mobilier urbain, « à la place » d'une partie du moteur électrique 4. Le moteur électrique est donc parfaitement protégé en étant logé au sein du volume interne V s'étendant axialement sur toute la longueur du moteur.

Eventuellement, en cas de choc de très forte intensité, la jante se casse au niveau de l'extension cylindrique. Une telle casse n'engendre pas obligatoirement de détérioration au niveau du moteur électrique. Le cas échéant, la solution permet de procéder au remplacement de la jante en réutilisant le moteur électrique initial ce qui s'avère beaucoup moins coûteux que d'avoir à remplacer un moteur électrique.

De plus, la jante est économique, simple à fabriquer, notamment en ayant recours à des modes de fabrication habituels dans le domaine des jantes de véhicule. A noté que le côté externe de la jante peut être autant évolué en termes d'esthétique que des jantes habituelles dépourvues d'extension cylindrique. En outre l'extension cylindrique n'est que très peu, voire pas, visible sur la roue assemblée motrice ainsi équipée.

Par exemple, seul le mode de réalisation préféré, illustré sur la figure 2, est compatible avec des masselottes d'équilibrage de roue qui se clipsent, se bloquent, s'attachent, sur le crochet intérieur ou pince le crochet intérieur 20. Par exemple, les autres modes de réalisation sont compatibles avec des masselottes d'équilibrages destinées à se coller. Dans ce cas, les masselottes peuvent être collées sur la surface d'extrémité 38 ou sur la surface externe 31 ; 32 ; 33 ; 34 ; 35 ; 36 ; 37 ; 39. Avantageusement, les masselottes d'équilibrage de la roue sont collées sur la surface interne du volume interne V, c'est-à-dire la surface cylindrique de rayon RV. Ainsi, la zone collée de la masselotte n'est pas sujette à un décollement provoqué par la force centrifuge due à la rotation de la roue.

La solution portant sur une jante comprenant une forme apte à protéger un moteur électrique interne est particulièrement adaptée à une roue assemblée de type IWM (« In Wheel Motor » en termes anglo-saxons), notamment sans transmission interne, par exemple dans laquelle la jante est fixée à un rotor du moteur électrique.

Enfin, la solution permet de conserver des pneumatiques standards, c'est-à-dire de ne pas augmenter la largeur de la bande de roulement. On évite ainsi des surcoûts, les pneumatiques larges étant davantage onéreux. En outre, en conservant des pneumatiques de taille standard, on s'affranchit d'une augmentation de frottements, d'une augmentation de la masse du pneumatique, et par conséquent d'une augmentation de la consommation en énergie du véhicule.

En remarque, la solution atteint donc l'objectif recherché de fournir une jante permettant d'éviter une détérioration d'un moteur électrique implanté dans la jante lors de franchissement d'obstacle par un véhicule, et présente l'avantage de pouvoir être utilisée pour des roues assemblées d'autres véhicules, à savoir des fourgons, camions, bus, cars, véhicules à trois roues, voire motocyclettes.

## Revendications

1. Jante (10) pour une roue (7), notamment pour une roue assemblée (2), d'axe principal (A) comprenant un volume interne cylindrique ou sensiblement cylindrique (V) d'axe confondu ou sensiblement confondu avec l'axe principal (A), le volume interne (V) ayant un rayon principal (RV) pour loger un moteur électrique (4) d'entraînement en rotation d'une telle roue, la jante (10) comprenant un crochet extérieur (11) et un crochet intérieur (20) destinés à maintenir en position un pneumatique (3) sur la jante (10), **caractérisée en ce que** la jante (10) comprend une extension cylindrique (30) d'axe confondu ou sensiblement confondu avec l'axe principal (A), l'extension cylindrique (30) s'étendant radialement depuis le rayon principal (RV) jusqu'à un rayon supérieur au rayon principal (RV) et s'étendant axialement selon une direction axiale (D) parallèle à l'axe principal (A) dirigée vers l'opposée du crochet extérieur (11) de sorte que l'extension cylindrique (30) enveloppe le volume interne (V) au-delà du crochet intérieur (20) selon la direction axiale (D) pour protéger un tel moteur électrique (4) en cas de choc au niveau de la jante (10).

2. Jante (10) selon la revendication 1, **caractérisée en ce que** le crochet intérieur (20) s'étend entre un rayon de fond de jante (R12) et un rayon maximal (R22) et **en ce que** l'extension cylindrique (30) comprend une surface externe cylindrique (39) de rayon compris entre le rayon principal (RV) et le rayon maximal (R22) du crochet intérieur (20).

3. Jante (10) selon la revendication 1, **caractérisée en ce que** le crochet intérieur (20) s'étend entre un rayon de fond de jante (R12) et un rayon maximal (R22) et **en ce que** l'extension cylindrique (30) comprend une surface externe cylindrique (39) de rayon égal ou sensiblement égal au rayon de fond de jante (R12).

4. Jante (10) selon la revendication 1, **caractérisée en ce que** le crochet intérieur (20) s'étend entre un rayon de fond de jante (R12) et un rayon maximal (R22) et **en ce que** l'extension cylindrique (30) comprend une surface externe cylindrique (31) de rayon égal ou sensiblement égal au rayon maximal (R22) du crochet intérieur (20).

5. Jante (10) selon la revendication 1, **caractérisée en ce que** le crochet intérieur (20) s'étend entre un rayon de fond de jante (R12) et un rayon maximal (R22) et **en ce que** l'extension cylindrique (30) comprend une surface externe tronconique ou sensiblement tronconique (32 ; 33) s'étendant depuis le rayon maximal (R22) du crochet intérieur (20) jusqu'à un rayon égal ou sensiblement égal au rayon de fond de jante (R12) ou jusqu'au rayon principal (RV) ou sensiblement jusqu'au rayon principal (RV) du volume interne (V).

6. Jante (10) selon la revendication 1, **caractérisée en ce que** le crochet intérieur (20) s'étend entre un rayon de fond de jante (R12) et un rayon maximal (R22) et **en ce que** l'extension cylindrique (30) comprend une surface externe comprenant une portion arrondie concave (34 ; 36) ou convexe (35 ; 37) s'étendant depuis le rayon maximal (R22) du crochet intérieur (20) jusqu'à un rayon égal ou sensiblement égal au rayon de fond de jante (R12)ou jusqu'au rayon principal (RV) ou sensiblement jusqu'au rayon principal (RV) du volume interne (V).

7. Roue (7) comprenant un voile (6) et une jante (10) selon l'une des revendications précédentes, **caractérisée en ce que** la roue (7) est monobloc, notamment en étant venue de matière.

8. Roue (7) selon la revendication précédente, **caractérisée en ce qu'**elle est en alliage d'aluminium ou en matériau composite ou en acier.

9. Roue, notamment roue assemblée (2), comprenant une jante (10) selon l'une des revendications 1 à 6 et un moteur électrique (4) agencé au sein du volume interne (V).

10. Véhicule, notamment véhicule automobile (1), notamment véhicule automobile électrique, **caractérisé en ce qu'**il comprend au moins une roue selon l'une des revendications 7 à 9, ou au moins une jante (10) selon l'une des revendications 1 à 6.
